Europäisches Patentamt

European Patent Office

Office européen des brevets

(11) Publication number: **0 507 876 B1**

# EUROPEAN PATENT SPECIFICATION

(45) Date of publication of patent specification: **17.05.95**  (51) Int. Cl.[6]: **C08F 4/76**, C08F 4/603, C08F 10/00

(21) Application number: **91903112.0**

(22) Date of filing: **27.12.90**

(86) International application number:
**PCT/US90/07669**

(87) International publication number:
**WO 91/09882 (11.07.91 91/15)**

Divisional application 94202617.0 filed on
27/12/90.

(54) **SUPPORTED IONIC METALLOCENE CATALYSTS FOR OLEFIN POLYMERIZATION.**

(30) Priority: **02.01.90 US 459921**

(43) Date of publication of application:
**14.10.92 Bulletin 92/42**

(45) Publication of the grant of the patent:
**17.05.95 Bulletin 95/20**

(84) Designated Contracting States:
**AT BE CH DE DK ES FR GB GR IT LI LU NL SE**

(56) References cited:
**EP-A- 0 232 595**
**EP-A- 0 277 003**
**EP-A- 0 277 004**
**US-A- 4 017 525**

(73) Proprietor: **EXXON CHEMICAL PATENTS INC.**
**1900 East Linden Avenue**
**Linden,**
**New Jersey 07036-0710 (US)**

(72) Inventor: **HLATKY, Gregory, George**
**1114 Indian Autumn**
**Houston, TX 77062 (US)**
Inventor: **UPTON, David, Jonathan**
**706 Glenmore**
**Pasadena, TX 77503 (US)**
Inventor: **TURNER, Howard, William**
**303 Elder Glen**
**Webster, TX 77598 (US)**

(74) Representative: **Veldhuizen, Albert Dirk Willem et al**
**Exxon Chemical Limited**
**Exxon Chemical Technology Centre**
**PO Box 1**
**Abingdon**
**Oxfordshire OX13 6BB (GB)**

EP 0 507 876 B1

**Description**

1. Field of the Invention

The invention relates to supported catalysts for polymerization of olefins including gas or slurry phase polymerization of olefins, diolefins, cyclic olefins and acetylenically unsaturated monomers. These catalysts, which may be supported on known catalyst supports, include a Group IV-B metal metallocene compound and an ionic activator compound. While the homogeneous variant of this catalyst system has been previously disclosed in EP-A-277003, a supported form of the catalyst system has not heretofore been produced. The supported catalyst, suitable for use in gas or slurry phase olefin polymerization, provides a polymer product having a narrower particle size distribution and higher bulk density than achievable with the homogeneous catalyst system. Furthermore, the use of the supported catalyst in the gas phase results in greatly reduced reactor fouling as compared to the unsupported or homogeneous variant. By employing suitably sized supports, the catalyst system can be employed in solution and high pressure polymerization processes.

2. Background

Ziegler-Natta type catalysts for the polymerization of olefins are well known. The traditional Ziegler-Natta type systems comprise a metal halide activated to a catalyst species by reaction with a metal alkyl cocatalyst, particularly an aluminum alkyl cocatalyst. The activation of these traditional Ziegler-Natta catalysts generates a variety of different active sites. As a consequence of this non-uniformity of the active sites, the catalysts produce polymer products of broad molecular weight distribution (MWD). Furthermore, the copolymer products exhibit broad composition distribution (CD), poor comonomer incorporation and blocky sequence distribution.

Recently it has been found that active catalysts are formed when a bis(cyclopentadienyl) compound of the Group IV-B metals, in particular zirconium and hafnium, is activated by an alumoxane. The metallocene-alumoxane catalysts whether homogeneous or supported generally possess high activity and are more versatile than conventional Ziegler-Natta catalysts in that they may be effectively used to produce a variety of polymer products including, for example, high density linear polyethylene (HDPE), linear low density polyethylene (LLDPE), ethylene-propylene copolymer (EP), non-crystalline polypropylene and crystalline polypropylene. The metallocene-alumoxane catalysts also offer the significant advantage over the traditional Ziegler-Natta catalysts of being able to produce polymers with narrow MWD.

While the metallocene-alumoxane catalysts do offer significant advantages over the traditional Ziegler-Natta catalysts, they nevertheless have limitations in practical commercial applications. These limitations include the relatively high cost of the alumoxane cocatalysts. Alumoxane is also air sensitive and difficult to manipulate. Furthermore, the metallocene-alumoxane catalysts, while producing a narrow MWD polymer product, have a limited capability to produce high molecular weight polymers or polymers having a high comonomer content.

European Patent Application 277,004 describes a new metallocene catalyst which does not require either an alkyl aluminum or an alumoxane as an activator. The Group IV-B metallocene catalyst is prepared as a reaction product of a Group IV-B metal metallocene compound and an ionic activator compound. The ionic activator comprises a cation having a donatable proton and a labile, bulky anion which is a single coordination complex having a plurality of lipophilic radicals covalently coordinated to and shielding a central charge-bearing metal or metalloid atom, the bulk of said anion being such that upon reaction of the activator cation donatable proton with a proton reactable substituent of a bis(cyclopentadienyl) Group IV-B metal compound to form a Group IV-B metal cation, the anion of the activator is sterically hindered from covalently coordinating to the Group IV-B metal cation. Hence, an active catalytic species of a metallocene is formed, namely an ionic pair comprising a metallocene transition metal cation paired with a noncoordinating anion of the activator component.

The new metallocene catalyst system (hereafter referred to as an "ionic metallocene catalyst") eliminates the need for an expensive alumoxane activator. The ionic metallocene catalyst also offers other advantages over the metallocene-alumoxane catalysts such as permitting the production of polyolefin products of narrow MWD and of significantly higher weight average molecular weight at high rates of catalytic activity while also permitting better incorporation of comonomers and the control of the chain end chemistry of the polymer

The new ionic metallocene catalyst of EP-A-0277004 is, however, a homogeneous catalyst and generally can not be practically used for gas phase polymerization. The use of a supported catalyst offers the possibility of gas phase compatibility. Control of the particle size distribution of the polymeric product in the various polymerization processes eliminates or reduces the extent of reactor fouling.

Supported catalysts for olefin polymerization are well known in the art. These catalysts offer, among others, the advantages of being usable in gas or slurry phase reactors allowing the control of polymer particle size and thereby the control of product bulk density. Gas phase reactors also eliminate the need for a solvent and the equipment for solvent handling and separation. However, the known Ziegler-Natta olefin polymerization supported catalysts also present disadvantages which include broad MWD and composition distribution (CD), inefficient incorporation of comonomers, poor sequence distribution and, in the case of lower activity catalysts, the need for a product deashing step.

Supported metallocene-alumoxane catalysts for olefin polymerization are described in U.S. Patent 4,701,432 of Welborn. These supported metallocene-alumoxane catalysts are obtained by reacting a metallocene and an alumoxane in the presence of the solid support material. The supported catalyst may then be employed either as the sole catalyst component or may be employed in combination with an organometallic cocatalyst. The supported metallocene-alumoxane catalyst, however, still produces polymers of generally lower molecular weight and comonomer incorporation than desired for certain applications.

It would be desirable to provide a supported catalyst for gas or slurry phase olefin polymerization that eliminates the need for either an alumoxane or an alkyl aluminum cocatalyst. It would be further desirable that such supported catalyst be capable of providing a polymer product having a high molecular weight, narrow MWD and CD, good comonomer incorporation, good sequence distribution, high bulk density and controlled particle size for ease of removal from the reactor.

Summary

The invention provides a supported ionic metallocene catalyst which is suitable for use in the polymerization of olefins including gas or slurry phase polymerization of olefins. The heterogeneous catalyst, like its homogeneous counterpart disclosed in our European Patent Application EP 277 004, permits the production of polyolefins of high molecular weight and narrow molecular weight distribution (MWD) at high rates. Moreover, the polyolefin products of the supported catalyst have a narrow composition distribution (CD) and improved sequence distribution of comonomers as compared to the products of prior art conventional supported Ziegler-Natta catalysts.

The possibility of producing a supported catalyst was surprising since it would have been predicted that the reaction of ionic catalyst as described in the copending application with a Lewis base such as is present on a metal oxide surface would result in catalyst deactivation. This invention is even more surprising since aluminum alkyls are not present during catalyst preparation and furthermore the polymer products are similar to that obtained with the unsupported catalyst.

The supported ionic metallocene catalyst of this invention comprises the ionic metallocene catalyst and a suitable support material. The metallocene component of the ionic metallocene catalyst may be selected from a bis(cyclopentadienyl) derivative of a Group IV-B (Periodic Table of Elements, published and copyrighted by CRC Press, Inc., 1984) metal compound containing at least one ligand which will combine with an activator component or at least a portion thereof such as a cation portion thereof. The activator component is an ionic compound comprising a cation which will irreversibly react with at least one ligand contained in said Group IV-B metal compound (metallocene component) and an anion which is a single coordination complex comprising a plurality of lipophilic radicals covalently coordinated to and shielding a central formally charge-bearing metal or metalloid atom, which anion is bulky, labile and stable to any reaction involving the cation of the activator component. The charge-bearing metal or metalloid may be any metal or metalloid capable of forming a coordination complex which is not hydrolyzed by aqueous solutions. Upon combination of the metallocene component and activator component, the cation of the activator component reacts with one of the ligands of the metallocene component, thereby generating an Ion pair consisting of a Group IV-B metal cation with a formal coordination number of 3 and a valence of +4 and the aforementioned anion, which anion is compatible with and noncoordinating toward the metal cation formed from the metallocene component. The anion of the activator compound must be capable of stabilizing the Group IV-B metal cation complex without interfering with the ability of the Group IV-B metal cation or its decomposition product to function as a catalyst and must be sufficiently labile to permit displacement by an olefin, diolefin or an acetylenically unsaturated monomer during polymerization.

Either the ionic metallocene catalyst or both its components will be contacted with an inorganic or organic solid support material, preferably either thermally or chemically dehydrated before such contact, to form the supported ionic metallocene catalyst of this invention.

The method for preparing the supported ionic catalyst comprises the steps of,

(a) combining, in a solvent or diluent

(i) at least one metallocene component comprising a bis(cyclopentadienyl) metal compound containing at least one ligand capable of reacting with a proton, said metal being selected from Group IV B metals,

(ii) at least one activator component comprising a cation capable of donating a proton and an anion, said anion being a single coordination complex comprising a plurality of lipophilic radicals covalenty coordinated to and shielding a central charge-bearing metal or metalloid atom, said anion being bulky. labile and capable of stabilizing the metal cation formed as a result of reaction between the two, and

(iii) a catalyst support material suspended in a suitable solvent, and

(b) recovering a supported catalyst product as a free-flowing solid or slurry.

The supported catalyst of this invention will polymerize olefins, diolefins and/or acetylenically unsaturated monomers either alone or in combination with other olefins and/or other unsaturated monomers in liquid, slurry or gas phase reactions.

In general, catalysts can be selected so as to produce the polymer products which will be free of certain trace elements generally found in polymers produced with Ziegler-Natta type catalysts such as aluminum, magnesium or chloride. The polymer products produced with the catalysts of this invention should, then, have a broader range of applications than polymers produced with either the more conventional Ziegler-Natta type catalysts containing a metal alkyl, such as an aluminum alkyl, or the metallocene-alumoxane catalysts.

## Detailed Description of the Preferred Embodiments

The present invention relates to supported catalysts eminently suited for use in various polymerization processes including gas or slurry phase polymerization of olefins. The heterogeneous catalyst includes a metallocene of the Group IV-B transition metals, an ionic activator compound and a catalyst support.

## The Metallocene Component

The Group IV-B metal compounds, particularly the titanium, zirconium and hafnium compounds, useful as first compounds in the ionic metallocene catalyst system employed in the process of this invention are the bis(cyclopentadienyl) derivatives of titanium, zirconium or hafnium. In general, such useful titanium, zirconium and hafnium compounds may be represented by the following general formulae:

1. $(A\text{-}Cp)MX_1X_2$

2. $(A\text{-}Cp)MX'_1X'_2$

3. $(A\text{-}Cp)ML$

4. $(Cp^*)(CpR)MX_1$

wherein: M is a metal selected from the Group consisting of titanium (Ti), zirconium (Zr) and hafnium (Hf); (A-Cp) comprises either (Cp)(Cp*) or Cp-A'-Cp* and Cp and Cp* are the same or different substituted or unsubstituted cyclopentadienyl radicals, and wherein A' is a covalent bridging group preferably containing a Group IV-A element; L is an olefin, diolefin or aryne ligand; $X_1$ and $X_2$ are, independently, selected from the group consisting of hydride radicals, hydrocarbyl radicals preferably having from 1 to 20 carbon atoms, substituted-hydrocarbyl radicals, preferably with 1 or more of the hydrogen atoms replaced with a halogen atom and/or having from 1 to 20 carbon atoms, organo-metalloid radicals preferably comprising a Group IV-A element wherein each of the hydrocarbyl substituents contained in the organo-portion of said organo-metalloid, independently, contain from 1 to 20 carbon atoms and the like; $X'_1$ and $X'_2$ are joined and bound to the metal atom to form a metallacycle, in which the metal, $X'_1$ and $X'_2$ form a hydrocarbocyclic ring containing from 3 to 20 carbon atoms; and R is a substituent, preferably a hydrocarbyl substituent having from 1 to 20 carbon atoms, on one of the cyclopentadienyl radicals which is also bound to the metal atom. Each carbon atom in the cyclopentadienyl radical may be, independently, unsubstituted or substituted with

4

EP 0 507 876 B1

the same or a different radical selected from the Group consisting of hydrocarbyl radicals, substituted-hydrocarbyl radicals wherein one or more hydrogen atoms is replaced by a halogen atom, hydrocarbyl-substituted metalloid radicals wherein the metalloid is selected from Group IV-A of the Periodic Table of the Elements, halogen radicals and the like. Suitable hydrocarbyl and substituted-hydrocarbyl radicals which may be substituted for at least one hydrogen atom in the cyclopentadienyl radical will contain from 1 to 20 carbon atoms and include straight and branched alkyl radicals, cyclic hydrocarbon radicals, alkyl-substituted cyclic hydrocarbon radicals, aromatic radicals and alkyl-substituted aromatic radicals. Similarly, and when $X_1$ and/or $X_2$ is a hydrocarbyl or substituted-hydrocarbyl radical, each may, independently, contain from 1 to 20 carbon atoms and be a straight or branched alkyl radical, a cyclic hydrocarbyl radical, an alkyl-substituted cyclic hydrocarbyl radical, an aromatic radical or an alkyl-substituted aromatic radical. Suitable organometalloid radicals include mono-, di- and trisubstituted organometalloid radicals of Group IV-A elements wherein each of the hydrocarbyl Groups contain from 1 to about 20 carbon atoms. Suitable organometalloid radicals include trimethylsilyl, triethylsilyl, ethyldimethylsilyl, methyldiethyisilyl triphenylgermyl and trimethylgermyl.

Illustrative, but not limiting examples of bis(cyclopentadienyl)zirconium compounds which may be used in the preparation of the improved supported catalysts of the invention include:
(ethylcyclopentadienyl)(cyclopentadienyl) and bis(ethylcyclopentadienyl)zirconium dihydride, (propylcyclopentadienyl)(cyclopentadienyl) and bis(propylcyclopentadienyl)zirconium dihydride, (n-butylcyclopentadienyl)(cyclopentadienyl) and bis(n-butylcyclopentadienyl)zirconium dihydride, (t-butylcyclopentadienyl)-(cyclopentadienyl) and bis(t-butylcyclopentadienyl)zirconium dihydride, (cyclohexylmethylcyclopentadienyl)-(cyclopentadienyl) and bis(cyclohexylmethylcyclopentadienyl)zirconium dihydride, (benzylcyclopentadienyl)-(cyclopentadienyl) and bis(benzylcyclopentadienyl)zirconium dihydride, (diphenylmethylcyclopentadienyl)-(cyclopentadienyl) and bis(diphenylmethylcyclopentadienyl)zirconium dihydride;
(polyhydrocarbyl-substituted-cyclopentadienyl) zirconium compounds such as (dimethylcyclopentadienyl) (cyclopentadienyl) and bis(dimethylcyclopentadienyl) zirconium dimethyl, (trimethylcyclopentadienyl) (cyclopentadienyl) and bis(trimethylcyclopentadienyl) zirconium dimethyl, (tetramethylcyclopentadienyl) (cyclopentadienyl) and bis(tetramethylcyclopentadienyl) zirconium dimethyl, (permethylcyclopentadienyl) (cyclopentadienyl) and bis(permethylcyclopentadienyl) zirconium dimethyl, (ethyltetramethylcyclopentadienyl) (cyclopentadienyl) and bis(ethyltetramethylcyclopentadienyl) zirconium dimethyl, (indenyl)-(cyclopentadienyl) and bis(indenyl)zirconium dimethyl (dimethylcyclopentadienyl) (cyclopentadienyl) and bis(dimethylcyclopentadienyl) zirconium dihydride, (trimethylcyclopentadienyl) (cyclopentadienyl) and bis-(trimethylcyclopentadienyl) zirconium dihydride, (tetramethylcyclopentadienyl) (cyclopentadienyl) and bis-(tetramethylcyclopentadienyl)zirconium dihydride, (permethylcyclopentadienyl) (cyclopentadienyl) and bis-(permethylcyclopentadienyl)zirconium dihydride, (ethyltetramethylcyclopentadienyl) (cyclopentadienyl) and bis(ethyltetramethylcyclopentadienyl) zirconium dihydride, (indenyl)(cyclopentadienyl) and bis(indenyl)-zirconium dihydride (propylcyclopentadienyl) (cyclopentadienyl) and bis(propylcyclopentadienyl)zirconium dihydride, (n-butylcyclopentadienyl) (cyclopentadienyl) and bis(n-butylcyclopentadienyl)zirconium dihydride, (t-butylcyclopentadienyl) (cyclopentadienyl) and bis(t-butylcyclopentadienyl)zirconium dihydride, (cyclohexylmethylcyclopentadienyl) (cyclopentadienyl) and bis(cyclohexylmethylcyclopentadienyl)zirconium dihydride, (benzylcyclopentadienyl) (cyclopentadienyl) and bis(benzylcyclopentadienyl)zirconium dihydride, (diphenylmethylcyclopentadienyl) (cyclopentadienyl) and bis(diphenylmethylcyclopentadienyl) zirconium dihydride;
(metal hydrocarbyl-substituted cyclopentadienyl)zirconium compounds such as (trimethylsilylcyclopentadienyl)(cyclopentadienyl) and bis(trimethylsilylcyclopentadienyl)zirconium dimethyl, (trimethylgermylcyclopentadienyl)(cyclopentadienyl) and bis(trimethylgermylcyclopentadienyl)zirconium dimethyl, (trimethylstannylcyclopentadienyl)(cyclopentadienyl) and bis(trimethylstannylcyclopentadienyl)zirconium dimethyl, (trimethylplumbylcyclopentadienyl)(cyclopentadienyl) and bis(trimethylplumbylcyclopentadienyl)zirconium dimethyl, (trimethylsilylcyclopentadienyl)(cyclopentadienyl) and bis(trimethylsilylcyclopentadienyl)zirconium dihydride, (trimethylgermylcyclopentadienyl)(cyclopentadienyl) and bis(trimethylgermylcyclopentadienyl)-zirconium dihydride, (trimethylstannylcyclopentadienyl)(cyclopentadienyl) and bis-(trimethylstannylcyclopentadienyl)zirconium dihydride, (trimethylplumbylcyclopentadienyl)(cyclopentadienyl) and bis(trimethylplumbycyclopentadienyl)zirconium dihydride; (halogen-substituted-cyclopentadienyl) zirconium compounds such as (trifluoromethylcyclopentadienyl)(cyclopentadienyl) and bis-(trifluoromethylcyclopentadienyl)zirconium dimethyl (trifluororethylcyclopentadienyl)(cyclopentadienyl) and bis(trifluoromethylcyclopentadienyl)zirconium dihydride;
silyl-substituted bis(cyclopentadienyl) zirconium compounds such as bis(cyclopentadienyl) (trimethylsilyl)-(methyl)zirconium, bis(cyclopentadienyl) (triphenylsilyl)(methyl)zirconium, bis(cyclopentadienyl) [tris-(dimethylsilyl)silyl](methyl)zirconium, bis(cyclopentadienyl)[bis(mesityl)silyl](methyl)zirconium, bis-

5

(cyclopentadienyl)(trimethylsilyl)(trimethylsilylmethyl) zirconium, bis(cyclopentadienyl) (trimethylsily)(benzyl) zirconium;

(bridged-cyclopentadienyl)zirconium compounds such as methylene bis(cyclopentadienyl)zirconium dimethyl, ethylene bis(cyclopentadienyl)zirconium dimethyl, dimethylsilyl bis(cyclopentadienyl)zirconium dimethyl, methylene bis(cyclopentadienyl)zirconium dihydride, ethylene bis(cyclopentadienyl)zirconium dihydride and dimethylsilyl bis(cyclopentadienyl)zirconium dihydride and the like; zirconacycles such as bis(pentamethylcyclopentadienyl) zirconacyclobutane, bis(pentamethylcyclopentadienyl) zirconacyclopentane, bis(cyclopentadienyl)zirconaindane and

1-bis(cyclopentadienyl)zircona-3-dimethylsila-cyclobutane; olefin, diolefin and aryne ligand substituted bis-(cyclopentadienyl)zirconium compounds such as bis(cyclopentadienyl) (1,3-butadiene)zirconium, bis-(cyclopentadienyl) (2,3-dimethyl-1,3-butadiene)zirconium and

bis(pentamethylcyclopentadienyl)(benzyne)zirconium; (hydrocarbyl)(hydride) bis(cyclopentadienyl)zirconium compounds such as bis(pentamethylcyclopentadienyl)zirconium (phenyl)(hydride) and bis-(pentamethylcyclopentadienyl)zirconium (methyl)(hydride); and bis(cyclopentadienyl) zirconium compounds in which a substituent on the cyclopentadienyl radical is bound to the metal such as (pentamethylcyclopentadienyl) (tetramethylcyclopentadienylmethylene) zirconium hydride and (pentamethylcyclopentadienyl) (tetramethylcyclopentadienylmethylene)zirconium phenyl.

A similar list of illustrative bis(cyclopentadienyl) hafnium and bis(cyclopentadienyl)titanium compounds could be made, but since the lists would be nearly identical to that already presented with respect to bis-(cyclopentadienyl)zirconium compounds, such lists are not deemed essential to a complete disclosure. Other bis(cyclopentadienyl)hafnium compounds and other bis(cyclopentadienyl)titanium compounds as well as other bis(cyclopentadienyl)zirconium compounds which are useful in the catalyst compositions of this invention will, of course, be apparent to those skilled in the art.

## The Activator Component

Compounds useful as an activator component in the preparation of the catalyst of this invention will comprise a cation, which is a Bronsted acid capable of donating a proton, and a compatible noncoordinating anion containing a single coordination complex comprising a charge-bearing metal or metalloid core, which anion is relatively large (bulky), capable of stabilizing the active catalyst species (the Group IV-B cation) which is formed when the two compounds are combined. In polymerisation processes said anion will be sufficiently labile to be displaced by olefinic, diolefinic and acetylenically unsaturated substrates or other neutral Lewis bases such as ethers or nitriles. As indicated above, any metal or metalloid capable of forming a coordination complex which is stable in water may be used or contained in the anion of the second compound. Suitable metals, then, include, but are not limited to, aluminum, gold and platinum. Suitable metalloids include, but are not limited to, boron, phosphorus and silicon. Compounds containing anions which comprise coordination complexes containing a single metal or metalloid atom are, of course, well known and many, particularly such compounds containing a single boron atom in the anion portion, are available commercially. In light of this, salts containing anions comprising a coordination complex containing a single boron atom are preferred.

In general, the activator compounds useful in the preparation of the catalysts of this invention may be represented by the following general formula:

5. $\quad [(L'\text{-}H)^+]_d[(M')^{m+}Q_1Q_2...Q_n]^{d-}$

Wherein:

L' is a neutral Lewis base; H is a hydrogen atom; [L'-H] is a Bronsted acid; M' is a metal or metalloid selected from the Groups subtended by Groups V-B to V-A of the Periodic Table of the Elements; i.e., Groups V-B, VI-B, VII-B, VIII-B, I-B, II-B, III-A, IV-A, and V-A;

$Q_1$ to $Q_n$ are selected, independently, from the Group consisting of hydride radicals, dialkylamido radicals, alkoxide and aryloxide radicals, hydrocarbyl and substituted-hydro-carbyl radicals and organometalloid radicals and any one, but not more than one, of $Q_1$ to $Q_n$ may be a halide radical - the remaining $Q_1$ to $Q_n$ being, independently, selected from the foregoing radicals;

m is an integer from 1 to 7; n is an integer from 2 to 8; and n - m = d.

The preferred activator compounds comprising boron may be represented by the following general formula:

6. $\quad [L'H]^+[BAr_1Ar_2X_3X_4]^-$

Wherein:

L' is a neutral Lewis base; H is a hydrogen atom;

[L'-H]$^+$ is a Bronsted acid; B is boron in a valence state of 3; $Ar_1$ and $Ar_2$ are the same or different aromatic or substituted-aromatic hydrocarbon radicals preferably containing from 6 to 20 carbon atoms and may be linked to each other through a stable bridging group; and $X_3$ and $X_4$ are radicals selected, independently, from the group consisting of hydride radicals, halide radicals, with the proviso that only $X_3$ or $X_4$ will be halide at the same time, hydrocarbyl radicals preferably containing from 1 to 20 carbon atoms, substituted-hydrocarbyl radicals, wherein one or more of the hydrogen atoms may be replaced by a halogen atom, preferably containing from 1 to 20 carbon atoms, hydrocarbyl-substituted metal (organometalloid) radicals wherein preferably each hydrocarbyl substitutent contains from 1 to 20 carbon atoms and said metal is preferably selected from Group IV-A of the Periodic Table of the Elements.

In general, $Ar_1$ and $Ar_2$ may, independently, be any aromatic or substituted-aromatic hydrocarbon radical containing from 6 to 20 carbon atoms. Suitable aromatic radicals include, but are not limited to, phenyl, naphthyl and anthracenyl radicals. Suitable substituents include, but are not necessarily limited to, hydrocarbyl radicals, organometalloid radicals, alkoxy radicals, alkylamido radicals and fluoro and fluorohydrocarbyl radicals such as those useful as $X_3$ and $X_4$. The substituent may be ortho, meta or para, relative to the carbon atoms bonded to the boron atom. When either or both $X_3$ and $X_4$ are a hydrocarbyl radical, each may be the same or a different aromatic or substituted-aromatic radical as are $Ar_1$ and $Ar_2$, or the same may be a straight or branched alkyl, alkenyl or alkynyl radical having from 1 to 20 carbon atoms, a cyclic hydrocarbon radical having from 5 to 8 carbon atoms or an alkyl-substituted cyclic hydrocarbon radical having from 6 to 20 carbon atoms. $X_3$ and $X_4$ may also, independently, be alkoxy or dialkylamido radicals wherein the alkyl portion of said alkoxy and dialkylamido radicals contain from 1 to 20 carbon atoms, hydrocarbyl radicals and organometalloid radicals having from 1 to 20 carbon atoms and the like. As indicated above, $Ar_1$ and $Ar_2$ may be linked to each other. Similarly, either or both of $Ar_1$ and $Ar_2$ could be linked to either $X_3$ or $X_4$.

Finally, $X_3$ or $X_4$ may also be linked to each other through a suitable bridging group.

Illustrative, but not limiting, examples of boron compounds which may be used as an activator component in the preparation of the improved catalysts of this invention are trialkyl-substituted ammonium salts such as triethylammonium tetra(phenyl)boron, tripropylammonium tetra(phenyl)boron, tri(n-butyl)-ammonium tetra(phenyl)boron, trimethylammonium tetra(p-tolyl)boron, trimethylammonium tetra(o-tolyl)-boron, tributylammonium tetra(pentafluorophenyl)boron, tripropylammonium tetra(o,p-dimethylphenyl)boron, tributylammonium tetra(m,m-dimethylphenyl)boron, tributylammonium tetra(p-tri-fluoromethylphenyl)boron, tributylammonium tetra(pentafluorophenyl)boron and tri(n-butyl)ammonium tetra(o-tolyl)boron; N,N-dialkyl anilinium salts such as N,N-dimethylanilinium tetra(phenyl)boron, N,N-diethylanilinium tetra(phenyl)boron and N,N-2,4,6-pentamethylanilinium tetra(phenyl)boron; dialkyl ammonium salts such as di(i-propyl)-ammonium tetra(pentafluorophenyl)boron and dicyclohexylammonium tetra(phenyl)boron; and triaryl phosphonium salts such as triphenylphosphonium tetra(phenyl)boron, tri(methylphenyl)phosphonium tetra-(phenyl)boron and tri(dimethylphenyl)phosphonium tetra(phenyl)boron.

Suitable compounds containing other metals and metalloids which are useful as activator components can be usefully employed. In this regard, it should be noted that the foregoing list is not intended to be exhaustive and that other useful boron compounds as well as useful compounds containing other metals or metalloids would be readily apparent to those skilled in the art from the foregoing general equations.

## The Catalyst Support

The support material is an inorganic oxide in particulate form and is preferably a porous support.

Suitable inorganic oxide materials which are desirably employed in accordance with this invention include Group II-A, III-A, IV-A or IV-B metal oxides. The most preferred catalyst support materials include silica, alumina, and silica-alumina and mixtures thereof. Other inorganic oxides that may be employed either alone or in combination with the silica, alumina or silica-alumina are talc, magnesia, titania zirconia or mixtures thereof.

The metal oxides generally contain surface hydroxyl groups which may react with and deactivate the ionic metallocene catalyst when the catalyst is added to the slurried metal oxide support. Therefore, it is preferred that the inorganic oxide support be dehydrated prior to use, i.e. subjected to a thermal treatment in order to remove water and reduce the concentration of the surface hydroxyl groups. The treatment may be carried out in vacuum or while purging with a dry inert gas such as nitrogen at a temperature of 100°C to 1000°C, and preferably, from 300°C to 800°C. Pressure considerations are not critical. The duration of

EP 0 507 876 B1

the thermal treatment can be from 1 to 24 hours. However, shorter or longer times can be employed.

As an alternative method of dehydration of the metal oxide support material, chemical dehydration can be advantageously employed. Chemical dehydration converts all water and hydroxyl groups on the oxide surface to inert species. Useful chemical agents are for example, chlorosilanes, such as trimethylchlorosilane, and alkyl aluminum reagents such as triethyl aluminum. The chemical dehydration is accomplished by slurrying the inorganic particulate material, such as, for example, silica in an inert low boiling hydrocarbon, such as, for example, hexane. During the chemical dehydration reaction, the silica should be maintained in a moisture and oxygen-free atmosphere. To the silica slurry is then added a low boiling inert hydrocarbon solution of the chemical dehydrating agent.

The inorganic oxide support used in the preparation of the catalyst may be any particulate oxide or mixed oxide as previously described which has been thermally or chemically dehydrated such that it is substantially free of adsorbed moisture.

The specific particle size, surface area and pore volume of the inorganic oxide determine the amount of inorganic oxide that is desirable to employ in preparing the catalyst compositions, as well as affecting the properties of polymers formed with the aid of the catalyst compositions. These properties must frequently be taken into consideration in choosing an inorganic oxide for use in a particular aspect of the invention. In general, optimum results are usually obtained by the use of inorganic oxides having an average particle size in the range of 0.1 to 600 micronmeter (0.1 to 600 microns), preferably 0.3 to 80 micronmeter; a surface area of 50 to 1,000 square meters per gram, preferably 100 to 400 square meters per gram; and a pore volume of 0.5 to 3.5 ml per gram; preferably about 0.5 to 2 ml per gram.

Catalyst Preparation and Use

The supported ionic metallocene catalyst of this invention may be prepared by combining the metallocene component, the activator component and the support in suitable solvents in one or more steps.

A. Choice of Metallocene-Activator Pairs

In general, while most metallocene components identified above may be combined with most activator components identified above to produce an active olefin polymerization catalyst, it is desirable for continuity of the polymerization operations that either the metal cation initially formed from the metallocene component or a decomposition product thereof be a relatively stable catalyst. It is also desirable that the anion of the activator compound be stable to hydrolysis when an ammonium salt is used. Further, it is desirable that the acidity of the activator component be sufficient, relative to the metallocene component to facilitate the needed proton transfer. In general, bis(cyclopentadienyl) metal compounds which can be hydrolyzed by aqueous solutions can be considered suitable as metallocene components to form the catalysts described herein.

The chemical reactions which occur in forming the catalyst of this invention may, when a preferred, boron-containing compound is used as the second component, be represented by a reference to the general formulae set forth herein as follows:

7. $(A\text{-}Cp)MX_1X_2 + [L'\text{-}H]^+[BAr_1Ar_2X_3X_4]^- \rightarrow [(A\text{-}Cp)MX_1]^+[BAr_1Ar_2X_3X_4]^- + HX_2 + L'$ or $[(A\text{-}Cp)MX_2]^{+}[BAr_1Ar_2X_3X_4]^- + HX_1 + L'$

$$8. \quad (A\text{-}Cp)MX'_1X'_2 + [L'\text{-}H]^+[BAr_1Ar_2X_3X_4]^- \rightarrow$$
$$[(A\text{-}Cp)M(X'_1X'_2H)]^+[BAr_1Ar_2X_3X_4]^- + L' \text{ or}$$
$$[(A\text{-}Cp)M(X'_2X'_1H)]^+[BAr_1Ar_2X_3X_4]^- + L'$$

8

9. $(A\text{-}Cp)ML + [L'\text{-}H]^+[BAr_1Ar_2X_3X_4]^- \rightarrow [(A\text{-}Cp)M(LH)]^+[BAr_1Ar_2X_3X_4]^- + L'$

10. $[(Cp)(R\text{-}Cp^*)MX_1] + [L'\text{-}H]^+[BAr_1Ar_2X_3X_4]^- \rightarrow$
$[Cp(HR\text{-}Cp^*)MX_1]^+[BAr_1Ar_2X_3X_4]^- + L'$ or
$[Cp(R\text{-}Cp^*)M]^+[BAr_1Ar_2X_3X_4]^- + HX_1 + L'$

In the foregoing reaction equations the symbols have been previously defined. In general, the stability and rate of formation of the products in the foregoing reaction equations, particularly the metal cation, will vary depending upon the choice of the solvent, the acidity of the $[L'\text{-}H]^+$ selected, the particular L', the anion, the temperature at which the reaction Is completed and the particular bis(cyclopentadienyl) derivative of the metal selected. Generally, the initially formed ion-pair will be an active polymerization catalyst and will polymerize $\alpha$-olefins, diolefins, strained cyclic olefins and acetylenically unsaturated monomers either alone or in combination with other monomers. In some cases, however, the initial metal cation will decompose to yield an active polymerization catalyst.

With respect to the combination of the metallocene component with the activator component to form a catalyst of this invention, it should be noted that the two compounds combined for preparation of the active catalyst must be selected to avoid transfer of a fragment of the anion, particularly an aryl group, to the metal cation, thereby forming a catalytically inactive species. This can be done by steric hindrance, resulting from substitutions on the cyclopentadienyl carbon atoms as well as substitutions on the aromatic carbon atoms of the anion. It follows, then, that the metallocene components comprising perhydrocarbyl-substituted cyclopentadienyl radicals could be effectively used with a broader range of activator compounds than could metallocene components comprising unsubstituted cyclopentadienyl radicals. As the amount and size of the substitutions on the cyclopentadienyl radicals are reduced however, more effective catalysts are obtained with activator compounds containing anions which are more resistant to degradation, such as those with substituents on the ortho positions of the phenyl rings. Another means of rendering the anion more resistant to degradation is afforded by fluorine substitution, especially perfluoro-substitution, in the anion. Fluoro-substituted stabilizing anions may, then, be used with a broader range of metal compound (first components). Activators in which the anions comprise pentafluorophenyl groups are preferred for preparing ion-pair metallocene catalysts of this invention.

It is preferred that the mole ratio of metallocene component to activator component be 1:1 or greater. In a reaction corresponding to general formula 1, when the anion comprises pentafluorophenyl groups, two structurally distinct forms of thermally stable ionic catalysts have been identified by NMR spectroscopy and are shown in general formulae 5 and 6, using tetrakis(pentafluorophenyl)boron as a representative anion:

11. $[(A\text{-}Cp)MX_1(L')][B(C_6F_5)_4]$

12. $[\{(A\text{-}Cp)MX_1\}_2(Y\text{-}X_1)][B(C_6F_5)_4]$

In the foregoing formulae, the symbols A-Cp, M, L', and $X_1$ correspond to the definitions set forth in general formulae 1-4. The symbol "Y" indicates the ligand $X_1$ bridges the two metal centers. In both general formulae 5 and 6, NMR experiments indicate that the fluorinated boron anion is completely non-coordinating. When the molar ratio of metallocene component to activator component is 1:1, L' weakly coordinates to and stabilizes the metallocene cation when L' is an aniline derivative, for example N,N-dimethylaniline, to give an ionic catalyst of general formula 5. When the molar ratio of metallocene component to activator component is greater than 1:1 an X group, for examples, a methyl group of an excess $(A\text{-}Cp)M(CH_3)_2$ molecule when $(A\text{-}Cp)M(CH_3)_2$ is the metallocene used, weakly coordinates to and stabilizes the metallocene cation to give an ionic catalyst of general formula 6.

B. Catalyst Preparation

The supported catalyst of this invention can be prepared by combining the metallocene, activator components and support in one or more suitable solvents or diluent. Suitable solvents and/or diluents include; but are not necessarily limited to, straight and branched-chain hydrocarbons such as isobutane, butane, pentane, hexane, heptane and octane; cyclic and alicyclic hydrocarbons such as cyclohexane, cycloheptane, methylcyclohexane and methylcycloheptane; and aromatic and alkyl-substituted aromatic compounds such as benzene, toluene and xylene.

It is preferred that the catalyst components be handled in an inert, moisture-free, oxygen-free environment such as argon, nitrogen or helium because of the sensitivity of the catalyst components to moisture and oxygen.

In a preferred method, the metallocene and activator components are combined in a first step in an aromatic solvent to produce a solution of the reaction product. This reaction may be carried out in the temperature range -100° to 300°C, preferably 0° to 100°C. Holding times to allow for the completion of the reaction may range from 10 seconds to 60 minutes depending upon variables such as reaction temperature and choice of reactants.

The solution produced by combining the metallocene and activator components is then contacted with the support. The method of contact may vary, but it is preferred that the solution be added to a rapidly stirred slurry of the catalyst support in a hydrocarbon solvent, preferably an aliphatic solvent and especially pentane.

In another preferred method, in a first step, the activator component is dissolved in an aromatic solvent with the support to produce a supported activator component. This reaction is carried out at a temperature sufficient to produce a homogeneous solution of the activator component, preferably between 25°C to 200°C. The aromatic solvent is then removed to leave a free-flowing supported material. The supported material is then contacted with the metallocene component, preferably in an aliphatic solvent to produce the supported catalyst.

Regardless of the method, the active supported catalyst can be recovered by evaporation of the solvent to obtain a free-flowing solid or alternatively, the active supported catalyst can be maintained in its slurry state for direct use.

Contact temperatures may range from 0° to 100°C depending upon the solvents used. Contact times bay vary from 10 seconds to 60 minutes, longer contact times than 60 minutes not providing any significant additional benefits.

In the preparation of the supported catalyst, the reagents should be combined to provide a catalyst concentration (metallocene and activator) on the support of from 0.01 wt % to 20 wt %, preferably 1 wt % to 5 wt % based upon the weight of the support.

In a most preferred embodiment of the present invention, bis(cyclopentadienyl)zirconium dimethyl or bis(cyclopentadienyl)hafnium dimethyl will be reacted with N,N-dimethylanilinium tetra(pentafluorophenyl)-boron and then contacted with an alumina, silica or silica-alumina support to produce the most preferred catalyst of the present invention. The metallocene and activator components will be combined at a temperature within the range -100° to 300°C, preferably from 0°C to 100°C, and preferably in an aromatic hydrocarbon solvent, most preferably toluene. A nominal holding time within the range from 10 seconds to 60 minutes will be sufficient before the mixture is contacted with a slurry of the dried support material in an aliphatic solvent for a contacting period of from 10 seconds to 60 minutes.

In another preferred method, in a first step, N,N-dimethylanilinium tetra(pentafluorophenyl)boron is dissolved in an aromatic solvent maintained at a temperature sufficient to dissolve the activator component. The support is slurried therein and the activator and support are reacted for 1 minute to 1 hour to produce a supported activator component. The aromatic solvent is removed to leave a free-flowing support material containing the activator component. This supported activator component is then contacted with bis-(cyclopentadienyl)zirconium dimethyl or bis(cyclopentadienyl)hafnium dimethyl, preferably in an aliphatic solvent to produce the supported catalyst.

With either method, the active supported catalyst can be recovered by evaporation of the solvent to obtain a free-flowing solid or, alternately, the active supported catalyst can be maintained in a slurry state for direct use.

C. Catalyst Use

The supported ionic metallocene catalyst may be used to polymerize α-olefins and acetylenically unsaturated monomers having from 2 to 18 carbon atoms and/or diolefins having from 4 to 18 carbon atoms either alone or in combination. The catalyst may also be used to polymerize α-olefins, diolefins, strained cyclic olefins and/or acetylenically unsaturated monomers in combination with other unsaturated monomers. While the catalyst is active for this broad range of olefinic monomer feedstock, α-olefin polymerization is preferred especially the homopolynerization of ethylene or the copolymerization of ethylene with olefins having from 3 to 10 carbon atoms.

In a preferred embodiment of the present invention, the metallocene component will be a bis-(cyclopentadienyl)-Group IV-B metal compound containing two, independently, substituted or unsubstituted cyclopentadienyl radicals and one or two lover alkyl substituents and/or one or two hydride substituents and the activator component will be a tri-substituted ammonium salt of a fluorinated tetraphenyl boron anion. Each of the tri-substitutions in the ammonium cation will be the same or a different lower alkyl or aryl radical. By lower alkyl is meant an alkyl radical containing from 1 to 4 carbon atoms. N,N-dimethylanilinium tetra(pentafluorophenyl)boron is particularly preferred. Alumina, silica or silica-alumina will be the preferred support for producing the supported ionic metallocene catalyst.

Certain of the catalysts of this invention, particularly those based on hafnocenes - using the catalyst produced from the reaction of bis(cyclopentadienyl)hafnium dimethyl and the tri-substituted ammonium salt of tetra(pentafluorophenyl)boron as an example - when used as described herein for the polymerization and copolymerization of a-olefins, diolefins, and/or acetylenically unsaturated monomers, in the absence of a chain transfer agent, can lead to the production of extremely high molecular weight polymers and copolymers having relatively narrow molecular weight distributions. In this regard, it should be noted that homopolymers and copolymers having molecular weights up to about $2 \times 10^6$ or higher and molecular weight distributions within the range of 1.5 to 3 or greater can be produced with the catalysts of this invention. Combinations of two or more ionic metallocene catalyst with the support can be employed In order to obtain broader MWD such as up to about 15 or greater. Alternatively, two or more separately supported catalysts can be used to obtain broad MWD polymers and copolymers.

Supported catalysts of this invention containing a metallocene component which is either a pure enantiomer or the racemic mixture of two enantiomers of a rigid, chiral metallocene can polymerize prochiral olefins (propylene and higher $\alpha$-olefins) to crystalline polymers including syndiotactic and isotactic polymers. Bis(cyclopentadienyl)metal compounds in which each of the cyclopentadienyl radicals is substituted and containing a covalent bridging group between the two cyclopentadienyl radicals are particularly useful for isotactic polymerizations of this type. Prochiral metallocenes, for example those based on complexes of propyl-2-cyclopentadienyl-2-(1-fluorenyl) hafnium, can be used to polymerize propylene or higher $\alpha$-olefins to syndiotactic polymers.

The supported catalysts may be most usefully employed in gas or slurry phase processes, both of which are known to those of skill in the art. Thus, polymerizations using the invention supported catalysts may be conducted by either of these processes, generally at a temperature in the range of 0°-160°C or even higher, and under atmospheric, subatmospheric, or superatmospheric pressure conditions.

A slurry polymerization process can utilize sub- or super-atmospheric pressures and temperatures in the range of -80-250°C. In a slurry polymerization, a suspension of solid, particulate polymer is formed in a liquid polymerization medium to which ethylene, $\alpha$-olefin, diolefin, cyclic olefin or acetylenically unsaturated comonomer, hydrogen and catalyst are added. Alkanes and cycloalkanes, such as butane, pentane, hexane, or cyclohexane, are preferred with $C_4$ to $C_{10}$ alkanes especially preferred. Preferred solvents also include liquid olefins which may act as monomers or comonomers including ethylene, propylene, butadiene, cyclopentene, 1-hexene, 3-methyl-1-pentene, 4-methyl-1-pentene, 1,4-hexadiene, 1-octene and 1-decene.

A gas-phase polymerization process utilizes superatmospheric pressure and temperatures in the range of 50° - 120°C. Gas-phase polymerization can be performed in a stirred or fluidized bed of catalyst and product particles in a pressure vessel adapted to permit the separation of product particles from unreacted gases. Thermostated ethylene, comonomer, hydrogen and an inert diluent gas such as nitrogen can be introduced or recirculated so as to maintain the particles at a temperature of 50° - 120°C. Polymer product can be withdrawn continuously or semi-continuously at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal. The polymer obtained can be extruded into water and cut into pellets or other suitable comminuted shapes. Pigments, antioxidants and other additives, as is known in the art, may be added to the polymer.

While it is a characteristic of the invention supported catalyst that the produced polymers have a narrow molecular weight distribution, broad molecular weight distribution polymers may be produced by using two or more metallocenes or two or more activators.

The advantages of the instant invention will be more readily appreciated by reference to the following illustrative, non-limiting examples.

Example 1

A supported catalyst was prepared by reacting bis(cyclopentadienyl)hafnium dimethyl (30 mg) with N,N-dimethylanilinium tetrakis(pentafluorophenyl)boron (60 mg) in toluene (8 ml). This solution was added slowly to a suspension of basic alumina (Brockman Activity I, dried overnight at 100°C under vacuum; 2.0 g) in pentane (25 ml). The mixture was allowed to stir for about 3 minutes at room temperature. The supernatant solution was then decanted from the solid material and the solids reslurried with fresh pentane. The supernatant solution was again decanted from the solids and the solids suspended in fresh pentane (ca. 30 ml). This suspension was transferred, under nitrogen, by means of a double-ended needle into a 1 liter stainless-steel autoclave containing 400 ml of dry, deoxygenated hexane and which had been previously flushed with nitrogen. The autoclave was then pressured to 90 psig (6.2 bar) with ethylene and stirred at 40°C. After 30 minutes, the autoclave was cooled, vented and the contents separated by filtration. The yield of linear granular, free-flowing polyethylene was 11.2 g. The polymer had a weight-average molecular weight of 594,000 and a molecular weight distribution of 2.15.

Example 2

The supported catalyst of Example 1 was used to polymerize ethylene in a process similar to that of Example 1 except that the autoclave was pressured to 300 psig of ethylene. The yield of linear granular, free-flowing polyethylene was 48.5 g with a bulk density of 0.17 g/cm$^3$ versus 0.07 g/cm$^3$ when an unsupported, homogeneous catalyst is used.

Example 3

A supported catalyst was prepared by reacting bis(cyclopentadienyl)zirconium dimethyl (20 mg) with N,N-dimethylanilinium tetrakis(pentafluorophenyl)boron (60 mg) in toluene (20 ml). This solution was added slowly to a suspension of basic alumina (2.0 g) in pentane (25 ml). The mixture was allowed to stir for about 3 minutes at room temperature. The supernatant solution was decanted from the solid material and the solids reslurried with fresh pentane. The supernatant solution was again decanted from the solids and the solids were suspended in fresh pentane (ca. 30 ml). This suspension was transferred, under nitrogen, by means of a double-ended needle into a 1 liter stainless-steel autoclave, previously flushed with nitrogen, containing 400 ml of dry, deoxygenated hexane. The autoclave was then pressured to 2.76 mPa.g (400 psig) with ethylene and stirred at 40°C. After 30 minutes, the autoclave was cooled and vented and the contents isolated by filtration. The yield of linear granular, free-flowing polyethylene was 4.7 g with a weight-average molecular weight of 515,000 and a MWD of 1.74.

Example 4

A supported catalyst was prepared as In Example 1. except that 2.0 g of Davison 948 silica (dried at 800°C with a nitrogen purge) was used in place of alumina. The catalyst was used to polymerize ethylene in a process similar to that of Example 2. The yield of linear granular, free-flowing polyethylene was 11.1 g with a weight-average molecular weight of 1,384,000 and a MWD of 1.67.

Example 5

A supported catalyst was prepared as in Example 4 except that 20 mg of bis(cyclopentadienyl)-zirconium dimethyl was used In place of bis(cyclopentadienyl)hafnium dimethyl. This catalyst was used to polymerize ethylene in a process similar to that of Example 2. The yield of linear granular, free-flowing polyethylene formed was 2.7 g with a weight-average molecular weight of 759,000 and a MWD of 1.67.

Example 6

A supported catalyst was prepared by reacting bis(cyclopentadienyl)hafnium dimethyl (45 mg) with N,N-dimethylanilinium tetrakis(pentafluorophenyl)boron (90 mg) in toluene (20 ml). This solution was added slowly to a suspension of basic alumina (3.0 g) in pentane (25 ml). The mixture was allowed to stir for about 3 minutes at room temperature. The solution was decanted from the solid material and the solids reslurried with fresh pentane. The supernatant solution was again decanted from the solids and the solids were dried in an atmosphere of nitrogen. This suspension was injected into a 1 liter stainless-steel autoclave, previously flushed with nitrogen, containing 300 ml of propylene, by washing 50 ml of propylene through a stainless-steel catalyst addition tube containing the solid catalyst. The autoclave was then pressured to 0.69 mPa.g (100 psig) with ethylene and stirred at 50°C. After 15 minutes, the autoclave was cooled and vented and the polymer product was isolated. The yield of granular ethylene-propylene copolymer was 38 g. This polymer, which contained 21 wt. % ethylene, had a weight-average molecular weight of 423,000 and a molecular weight distribution of 2.88.

Example 7

Ethylene and propylene was copolymerized in a manner similar to Example 6, with the exceptions that the ethylene pressure was increased to 1.38 mPa.g (200 psig) and the autoclave was heated to 45°C. The yield of granular ethylene-propylene copolymer was 57.1 g. This polymer, which contained 52 wt. % ethylene, had a weight-average molecular weight of 1,006,000 and a molecular weight distribution of 2.01.

Example 8

A supported catalyst of this invention was prepared by reacting rac-dimethylsilylbis(indenyl)hafnium dimethyl (29 mg) with N,N-dimethylanilinium tetrakis(pentafluorophenyl)boron (45 mg) in toluene (10 ml). This solution was added slowly to a suspension of basic alumina (1.5 g) in pentane (25 ml). The mixture was allowed to stir for about 3 minutes at room temperature. The supernatant solution was decanted from the solid material and the solids reslurried with fresh pentane. The supernatant solution was again decanted from the solids and the solids were suspended in fresh pentane (ca. 30 ml). This suspension was transferred under nitrogen, by means of double-ended needle into a 1 liter stainless-steel autoclave, previously flushed with nitrogen, containing 400 ml of dry, deoxygenated hexane. Propylene (200 ml) was added to the autoclave, which was stirred at 50°C. After 1.75 hours, the autoclave was cooled and vented and the contents separated by filtration. The yield of isotactic polypropylene was 9.5 g. This polymer had a melting point of 127°C, as determined by differential scanning calorimetry, a weight average molecular weight of 131,000 and a molecular weight distribution of 1.95. Analysis by C-13 NMR spectroscopy indicated that the polypropylene was 92% isotactic.

Example 9

A 1 liter stainless-steel autoclave was charged with virgin polypropylene (14 mesh, 190 g) and heated to 85°C under a dynamic nitrogen purge. After cooling to 50°C, the catalyst of Example 1 (2.0 g) was added to the reactor from a stainless-steel catalyst addition tube using high-pressure nitrogen. After venting off the excess nitrogen pressure, ethylene was admitted to the stirred polymer bed to maintain a constant flow. The pressure inside the autoclave ranged from 68.9 to 241 kPa.g (10 to 35 psig). The maximum temperature in the autoclave reached 70°C. After 1 hour, the autoclave gas cooled and vented and the polymer mixture isolated. The net increase in the polymer weight was 38 g. A portion of the polyethylene was sieved from the polypropylene stirring aid and was found to have a weight-average molecular weight of 175,000 and a MWD of 2.53.

Example 10

Alumina (1.0 g), slurried in 10 ml of pentane, was treated for 13 minutes with 1 ml, of a 1 M solution of triethylaluminum in hexane. The support was separated from the liquid by decantation, washed twice, with 10 ml of pentane and dried in vacuo.

N,N-dimethylanilinium tetrakis (pentafluorophenyl)boron (30 mg) was heated in toluene (25 ml) to produce a homogeneous solution. The warm solution was added dropwise to the support prepared as described above. The solvent was removed in vacuo to leave a free-flowing supported material.

This support material (1.0 g) was slurried in 10 ml of pentane. To this was added dropwise 5 ml of a pentane solution containing bis(cyclopentadienyl) hafnium dimethyl (15 mg). After stirring at room temperature for 15 minutes, the solvent was removed in vacuo to leave a free-flowing supported catalyst.

Example 11

500 mg. of the supported catalyst of Example 10 was used to polymerize ethylene in a process similar to Example 1 except that the autoclave was pressured to 2.76 mPa.g (400 psig) with ethylene and was heated to 80°C. The yield of linear granular, free-flowing polyethylene was 132 g.

13

Example 12

Davison 952 silica (1 g) was slurried in pentane and treated with 1 ml of a 1 m solution of triethylaluminum in hexane. The support was separated from the liquid by decantation, washed twice with pentane and dried in vacuo.

N,N-dimethylanilinium tetrakis (pentafluorophenyl)boron (30 mg) was heated in toluene to produce a homogeneous solution. The warm solution was added dropwise to the support prepared as described above. The solvent was removed in vacuo to leave a free-flowing supported material.

This support material was slurried in 10 ml of pentane. To this was added dropwise 10 ml of a pentane solution containing 15 mg of rac-dimethylsilylbis(tetrahydroindenyl) - zirconium dimethyl. After stirring at room temperature for 15 minutes, the solvent was removed in vacuo to leave a free-flowing supported catalyst.

Example 13

The catalyst of Example 12 (887 mg) was injected by means of high-pressure nitrogen into a 1 liter stainless-steel autoclave, which was previously flushed with nitrogen, containing 300 ml dry, deoxygenated propylene at 40 degrees C. After 20 minutes, the contents was isolated. The yield of isotactic polypropylene was 101.7 g.

Example 14

Davison 948 silica (3 g), dehydrated at 800 degrees with an nitrogen purge was slurried in pentane and treated with 8 ml of a 1.5 M solution of triethylaluminum in hexane. The support was separated from the liquid by decantation, washed six times with pentane, and dried in vacuo.

N,N-dimethylanilinium tetrakis(pentafluorophenyl)boron (96 mg) was heated in 30 ml warm toluene, to produce a homogeneous solution. The warm solution was added dropwise to a toluene slurry of the support prepared as described above. The solvent was removed in vacuo with gentle heating to leave a free-flowing supported material.

This supported material was reslurried in pentane. To this was added dropwise 20 ml of a pentane solution containing 48 mg of bis(cyclopentadienyl)hafnium dimethyl. After stirring at room temperature for 15 minutes, the solvent was removed in vacuo to leave a free-flowing supported catalyst.

Example 15

The catalyst of Example 14 (100 mg) was injected with 100 ml hexane into a 1 liter stainless-steel autoclave, which was previously flushed with nitrogen, containing 300 ml of dry, deoxygenated hexane and pressurized with 1.38 mPa (200 psi) ethylene at 60 degrees C. After 20 minutes the autoclave was cooled and vented and the contents isolated by filtration. The yield of linear polyethylene was 78.7 g.

**Claims**

1.  A method for preparing a supported ionic catalyst comprising the steps of:
    (a) combining, in a solvent or diluent
       (i) at least one metallocene component comprising a bis(cyclopentadienyl) metal compound containing at least one ligand capable of reacting with a activator component (ii) or a portion thereof said metal being selected from a Group IVB metal preferably titanium, zirconium or hafnium,
       (ii) at least one activator component comprising a cation which will irreversibly react with said at least one ligand of the metallocene component and an anion, said anion being a single coordination complex comprising a plurality of lipophilic radicals covalently coordinated to and shielding a central charge-bearing metal or metalloid atom, said anion being bulky, labile and capable of stabilizing the metal cation formed as a result of reaction between the two, and
       (iii) an inorganic oxide catalyst support material inparticulate form suspended in a suitable solvent;
       and
    (b) thereby forming a supported catalyst product as a free-flowing solid or slurry.

14

2. The method of claim 1 wherein said activator component is represented by the following general formula:

$$[(L'-H)^+]_d[(M')^{m+}Q_1Q_2...Qn]^{d-}$$

wherein:

L' is a neutral Lewis base; H is a hydrogen atom;

$[L'-H]^+$ is a Bronsted acid;

M' is a metal or metalloid selected from the groups subtended by Groups V-B to V-A of the Periodic Table of the Elements;

i.e. Groups V-B, VI-B, VII-B, VIII, I-B, II-B, III-A, IV-A and V-A;

Q1 to Qn are selected, independently, from the group consisting of hydride radicals, dialkylamido radicals, alkoxide and

aryloxide radicals, hydrocarbyl and substituted-hydrocarbyl radicals and organometalloid radicals and any one, but not more than one, of $Q_1$ to $Q_n$ may be a halide radical with the remaining $Q_1$ to $Q_n$ being, independently, selected from the foregoing radicals;

m is an integer from 1 to 7; n is an integer from 2 to 8; and n - m = d.

3. The method of claim 1 or 2 wherein said activator component is represented by the following general formula:

$$[L'-H]^+[BAr_1Ar_2X_3X_4]^-$$

wherein:

L' is a neutral Lewis base; H is a hydrogen atom;

$[L'-H]^+$ is a Bronsted acid; B is boron in a valence state of 3;

$Ar_1$ and $Ar_2$ are the same or different aromatic or substituted-aromatic hydrocarbon radicals, said radicals being optionally linked to each other through a stable bridging group; and

$X_3$ and $X_4$ are, independently, selected from the group consisting of hydride radicals, halide radicals, hydrocarbyl and substituted-hydrocarbyl radicals and organometalloid radicals, with the proviso that only $X_3$ or $X_4$ will be a halide at the same time.

4. The method of claim 3 wherein said bis(cyclopentadienyl)metal compound is represented by one of the following general formulae:

1. $(A\text{-}Cp)MX_1X_2$

2. $(A\text{-}Cp)\overline{MX'_1X'_2}$

3. $(A\text{-}Cp)ML$

4. $(Cp^*)(Cp\overline{R)MX_1}$

Wherein:

M is a metal selected from the group consisting of titanium, zirconium and hafnium;

(A-Cp) comprises (Cp)(Cp*) or Cp-A'-Cp* and Cp and Cp* are the same or different substituted of unsubstituted cyclopentadienyl radicals;

A' is a covalent bridging group; L is an olefin, diolefin or aryne ligand;

$X_1$ and $X_2$ are, independently, selected from the group consisting of hydride radicals, hydrocarbyl radicals, substituted-hydrocarbyl radicals and organometalloid radicals;

$X'_1$ and $X'_2$ are joined and bound to the metal atom to form a metallacycle, in which the metal atom, $X'_1$ and $X'_2$ form a hydrocarbocyclic ring containing from 3 to 20 carbon atoms; and

R is a substituent on one of the cyclopentadienyl radicals which is also bound to the metal atom.

# EP 0 507 876 B1

**5.** The method of claim 1 wherein said support is selected from alumina, silica, alumina-silica, talc, magnesia, zirconia, titania, or mixtures thereof.

**6.** The method of claim 5 wherein said support is alumina, silica or mixtures thereof.

**7.** The method of claim 4 wherein the metallocene is bis(cyclopentadienyl)zirconium dimethyl or bis-(cyclopentadienyl)hafnium dimethyl; the activator is N,N-dimethylanilinium tetrakis(pentafluorophenyl)-boron; and the support is alumina or silica.

**8.** The method in of claim 1, wherein the at least one metallocene and the at least one activator component are reacted in a solvent or diluent and the direct product or the decomposition product of said direct product is contacted in a suitable solvent with a catalyst support material and thereafter the supported catalyst product is recovered as a free-flowing solid or slurry.

**9.** The method of claim 1, wherein the activator component is dissolved in an aromatic solvent, the support is slurried therein, allowed to react and the aromatic solvent removed, and the supported activator component is then contacted with the metallocene component in an aliphatic solvent.

**10.** A catalyst comprising the supported ionic catalyst obtainable by the method of claim 1.

**11.** The method of claim 9 wherein the aromatic solvent is used at a temperature of from 25 to 200° C, and the aromatic solvent is removed from the supported activator component before contacting the supported activator component with the metallocene.

**12.** A process for producing polymer which comprises polymerizing alpha olefins, diolefins, strained cyclic olefins and/or acetylenically unsaturated monomers in the presence of a supported catalyst according to claim 10 or produced by the method of any of claims 1 to 9 and 11.

**13.** The process of claim 12 wherein ethylene is homopolymerized or copolymerized with an olefin having 3 to 10 carbon atoms.

**14.** The process of claim 12 or 13 wherein the polymer produced has a molecular weight of up to $2 \times 10^6$ and a molecular weight distribution of from 1.5 to 3..

## Patentansprüche

**1.** Verfahren zur Herstellung eines mit einem Träger versehenen ionischen Katalysators, bei dem
(a) in einem Lösungsmittel oder Verdünnungsmittel
(i) mindestens eine Metallocenkomponente, die eine Bis(cyclopentadienyl)metallverbindung umfaßt, welche mindestens einen Liganden enthält, der in der Lage ist, mit einer Aktivatorkomponente (ii) oder einem Teil davon zu reagieren, wobei das Metall ein Gruppe-IV-B-Metall, vorzugsweise Titan, Zirconium oder Hafnium ist,
(ii) mindestens eine Aktivatorverbindung, die ein Kation, welches irreversibel mit dem mindestens einen Liganden der Metallocenkomponente reagiert, und ein Anion umfaßt, wobei das Anion ein einziger Koordinationskomplex ist, der mehrere lipophile Reste umfaßt, die kovalent um ein zentrales ladungstragendes Metall- oder Metalloidatom koordiniert sind und dieses abschirmen, wobei das Anion raumerfüllend, labil und zur Stabilisierung des als Folge der Reaktion zwischen den beiden gebildeten Metallkations in der Lage ist, und
(iii) ein in einem geeigneten Lösungsmittel suspendiertes anorganisches Oxid in Teilchenform als Katalysatorträgermaterial
kombiniert werden, und
(b) dadurch ein mit einem Träger versehenes Katalysatorprodukt als rieselfähiger Feststoff oder Suspension gebildet wird.

**2.** Verfahren nach Anspruch 1, bei dem die Aktivatorkomponente durch die folgende allgemeine Formel

$$[(L'\text{-}H)^+]_d[(M')^{m+}Q_1 Q_2 ... Q_n]^{d-}$$

16

wiedergegeben wird, in der

L' eine neutrale Lewisbase ist;

H ein Wasserstoffatom ist;

$[L'-H]^+$ eine Brönstedt-Säure ist;

M' ein Metall oder Metalloid ausgewählt aus den Gruppen, die durch die Gruppen V B bis V A des Periodensystems der Elemente begrenzt sind, d. h. den Gruppen V B, VI B, VII B, VIII, I B, II B, III A, IV A und V A, ist;

$Q_1$ bis $Q_n$ unabhängig voneinander ausgewählt sind aus der Gruppe bestehend aus Hydridresten, Dialkylamidoresten, Alkoxid- und Aryloxidresten, Kohlenwasserstoff- und substituierten Kohlenwasserstoffresten und Organometalloidresten, und ein beliebiges, aber nicht mehr als eins von $Q_1$ bis $Q_n$ ein Halogenidrest sein kann, wobei die restlichen $Q_1$ bis $Q_n$ unabhängig voneinander ausgewählt sind aus den zuvor genannten Resten;

m eine ganze Zahl von 1 bis 7 ist;

n eine ganze Zahl von 2 bis 8 ist,

und n-m = d ist.

3. Verfahren nach Anspruch 1 oder Anspruch 2, bei dem die Aktivatorkomponente durch die folgende allgemeine Formel

$[L'-H]^+[BAr_1 Ar_2 X_3 X_4]^-$

wiedergegeben wird, wobei

L' eine neutrale Lewisbase ist;

H ein Wasserstoffatom ist;

$[L'-H]^+$ eine Brönstedt-Säure ist;

B Bor mit einer Wertigkeit von 3 ist;

$Ar_1$ und $Ar_2$ die gleichen oder unterschiedliche aromatische oder substituierte aromatische Kohlenwasserstoffreste sind, wobei die Reste gegebenenfalls miteinander durch eine stabile Brückengruppe verbunden sind; und

$X_3$ und $X_4$ unabhängig voneinander ausgewählt sind aus der Gruppe bestehend aus Hydridresten, Halogenidresten, Kohlenwasserstoff- und substituierten Kohlenwasserstoffresten und Organometalloidresten mit der Maßgabe, daß nur $X_3$ oder $X_4$ zur gleichen Zeit ein Halogenid ist.

4. Verfahren nach Anspruch 3, bei dem die Bis(cyclopentadienyl)metallverbindung durch eine der folgenden allgemeinen Formeln

1. $(A\text{-}Cp)MX_1 X_2$

2. $(A\text{-}Cp)M\overline{X'_1 X'}_2$

3. $(A\text{-}Cp)ML$

4. $(Cp^*)(Cp\overline{R)M}X_1$

wiedergegeben wird, in denen

M ein Metall ausgewählt aus der Gruppe bestehend aus Titan, Zirconium und Hafnium ist;

(A-Cp) die Reste (Cp)(Cp*) oder Cp-A'-Cp* umfaßt und Cp und Cp* die gleichen oder verschiedene substituierte oder nicht substituierte Cyclopentadienylreste sind;

A' eine kovalente Brückengruppe ist;

L ein Olefin-, Diolefin- oder Arinligand ist;

$X_1$ und $X_2$ unabhängig ausgewählt sind aus der Gruppe bestehend aus Hydridresten, Kohlenwasserstoffresten, substituierten Kohlenwasserstoffresten und Organometalloidresten;

$X_1$ und $X_2$ verbunden und an das Metallatom gebunden sind, um eine metallacyclische Verbindung zu bilden, in der das Metallatom, $X'_1$ und $X'_2$ einen kohlenwasserstoffcyclischen Ring mit 3 bis 20 Kohlenstoffatomen bilden; und

R ein Substituent an einem der Cyclopentadienylreste ist, der auch an das Metallatom gebunden ist.

5. Verfahren nach Anspruch 1, bei dem der Träger ausgewählt ist aus Aluminiumoxid, Siliciumdioxid, Aluminiumoxid-Siliciumdioxid, Talk, Magnesiumoxid, Zirconiumoxid, Titandioxid oder Mischungen daraus.

6. Verfahren nach Anspruch 5, bei dem der Träger Aluminiumoxid, Siliciumdioxid oder Mischungen daraus ist.

7. Verfahren nach Anspruch 4, bei dem das Metallocen Bis(cyclopentadienyl)-zirconium-dimethyl oder Bis(cyclopentadienyl)-hafnium-dimethyl ist, der Aktivator N,N-Dimethylanilinium-tetrakis-(pentafluorphenyl)bor ist und der Träger Aluminiumoxid oder Siliciumdioxid ist.

8. Verfahren nach Anspruch 1, bei dem das mindestens eine Metallocen und die mindestens eine Aktivatorkomponente in einem Lösungsmittel oder Verdünnungsmittel umgesetzt werden und das direkte Produkt oder das Zersetzungsprodukt dieses direkten Produkts in einem geeigneten Lösungsmittel mit Katalysatorträgermaterial kontaktiert wird und danach das mit einem Träger versehene Katalysatorprodukt als rieselfähiger Feststoff oder Suspension gewonnen wird.

9. Verfahren nach Anspruch 1, bei dem die Aktivatorkomponente in einem aromatischen Lösungsmittel gelöst wird, der Träger in diesem suspendiert wird, reagieren gelassen wird und das aromatische Lösungsmittel entfernt wird, und die mit einem Träger versehene Aktivatorkomponente dann mit der Metallocenkomponente in einem aliphatischen Lösungsmittel kontaktiert wird.

10. Katalysator, der den gemäß dem Verfahren nach Anspruch 1 erhältlichen, mit einem Träger versehenen ionischen Katalysator umfaßt.

11. Verfahren nach Anspruch 9, bei dem das aromatische Lösungsmittel bei einer Temperatur von 25 bis 200°C verwendet wird und das aromatische Lösungsmittel von der mit einem Träger versehenen Aktivatorkomponente entfernt wird, bevor die mit einem Träger versehene Aktivatorkomponente mit dem Metallocen kontaktiert wird.

12. Verfahren zur Herstellung von Polymer, bei dem $\alpha$-Olefine, Diolefine, gespannte cyclische Olefine und/oder acetylenisch ungesättigte Monomere in Gegenwart eines mit einem Träger versehenen Katalysators gemäß Anspruch 10 oder hergestellt nach dem Verfahren gemäß einem der Ansprüche 1 bis 9 und 11 polymerisiert werden.

13. Verfahren nach Anspruch 12, bei dem Ethylen homopolymerisiert oder mit einem Olefin mit 3 bis 10 Kohlenstoffatomen copolymerisiert wird.

14. Verfahren nach Anspruch 12 oder 13, bei dem das hergestellte Polymer ein Molekulargewicht bis zu 2 x $10^6$ und eine Molekulargewichtsverteilung von 1,5 bis 3 aufweist.

**Revendications**

1. Procédé de préparation d'un catalyseur ionique fixé sur un support, comprenant les étapes consistant :
   (a) à associer, dans un solvant ou diluant
       (i) au moins un constituant du type métallocène comprenant un composé de bis-(cyclopentadiényl)métal contenant au moins un ligand capable de réagir avec un constituant activateur ou une de ses portions, ledit métal étant choisi parmi des métaux du Groupe IVB et consistant de préférence en titane, zirconium ou hafnium,
       (ii) au moins un constituant activateur comprenant un cation qui réagit de manière irréversible avec ledit ligand d'au moins un type du constituant du type métallocène et un anion, ledit anion consistant en un complexe de coodination simple comprenant une pluralité de radicaux lipophiles coordonnés de manière covalente avec, et faisant écran à, un atome de métal ou de métalloide central portant une charge, ledit anion étant volumineux, labile et capable de stabiliser le cation métallique formé en résultat de la réaction entre les deux, et

18

EP 0 507 876 B1

(iii) un oxyde inorganique servant de support de catalyseur, sous forme de particules, en suspension dans un solvant convenable ; et

(b) à former ainsi comme produit un catalyseur fixé sur un support, sous forme d'une substance solide à écoulement libre ou d'une suspension.

2. Procédé suivant la revendication 1, dans lequel le constituant activateur est représenté par la formule générale suivante :

$$[(L'-H)^+]_d[(M')^{m+}Q_1Q_2...Q_n]^{d-}$$

dans laquelle
L' représente une base de Lewis neutre ; H représente un atome d'hydrogène ;
$[L'-H]^+$ représente un acide de Bronsted ;
M' représente un métal ou métalloide choisi dans les groupes sous-tendus par les Groupes V-B à V-A du Tableau Périodique des Eléments ;
c'est-à-dire les Groupes V-B, VI-B, VII-B, VIII, I-B, II-B, III-A, IV-A et V-A ;
$Q_1$ à $Q_n$ sont choisis, indépendamment, dans le groupe consistant en radicaux hydrure, radicaux dialkylamido, radicaux alkoxyde et aryloxyde, radicaux hydrocarbyle et hydrocarbyle substitués et radicaux organo-métalloïdiques, l'un quelconque, mais pas plus d'un, des radicaux $Q_1$ à $Q_n$ pouvant représenter un radical halogénure, les radicaux $Q_1$ à $Q_n$ restants étant choisis, indépendamment, parmi les radicaux précités ;
m est un nombre entier de 1 à 7 ; n est un nombre entier de 2 à 8 ; et n - m = d.

3. Procédé suivant la revendication 1 ou la revendication 2, dans lequel le constituant activateur est représenté par la formule générale suivante :

$$[L'-H]^+[BAr_1Ar_2X_3X_4]^-$$

dans laquelle :
L' représente une base de Lewis neutre ; H représente un atome d'hydrogène ;
$[L'-H]^+$ représente un acide de Bronsted ; B représente le bore à l'état de valence 3 ;
$Ar_1$ et $Ar_2$ représentent des radicaux hydrocarbonés aromatiques ou aromatiques substitués identiques ou différents, lesdits radicaux étant liés facultativement l'un à l'autre par un groupe de jonction stable ; et
$X_3$ et $X_4$ sont choisis, indépendamment, dans le groupe consistant en radicaux hydrure, radicaux halogénure, radicaux hydrocarbyle et hydrocarbyle substitués et radicaux organo-métalloïdiques, sous réserve qu'un seul radical $X_3$ ou $X_4$ à la fois représente un halogénure.

4. Procédé suivant la revendication 3, dans lequel le composé de bis(cyclopentadiényl)métal est représenté par une des formules générales suivantes :

1.    $(A-Cp)MX_1X_2$

2.    $(A-Cp)M\overline{X'_1}X'_2$

3.    $(A-Cp)ML$

4.    $(Cp^*)(Cp\overline{R)MX_1}$

dans lesquelles
M représente un métal choisi dans le groupe consistant en titane, zirconium et hafnium ;
(A-Cp) consiste en (Cp)(Cp*) ou Cp-A'-Cp* et Cp et Cp* représentent des radicaux cyclopentadiényle substitués ou non substitués identiques ou différents ;
A' représente un groupe de jonction covalent ; L représente un ligand oléfine, dioléfine ou aryne ;
$X_1$ et $X_2$ sont choisis, indépendamment, dans le groupe consistant en radicaux hydrure, radicaux

19

hydrocarbyle, radicaux hydrocarbyle substitués et radicaux organo-métalloïdiques ;

X'$_1$ et X'$_2$ sont réunis et liés à l'atome métallique en formant un métallocycle, dans lequel l'atome métallique, X'$_1$ et X'$_2$ forment un noyau hydrocarbocyclique contenant 3 à 20 atomes de carbone ; et

R représente un substituant sur un des radicaux cyclopentadiényle qui est également lié à l'atome métallique.

5. Procédé suivant la revendication 1, dans lequel le support est choisi entre l'alumine, la silice, l'alumine-silice, le talc, la magnésie, la zircone, l'oxyde de titane et leurs mélanges.

6. Procédé suivant la revendication 5, dans lequel le support est l'alumine, la silice ou un de leurs mélanges.

7. Procédé suivant la revendication 4, dans lequel le métallocène est le bis(cyclopentadiényl)zirconium-diméthyle ou le bis(cyclopentadiényl)hafnium-diméthyle ; l'activateur est le N,N-diméthylanilinium-tétrakis(pentafluorophényl)bore ; et le support consiste en alumine ou silice.

8. Procédé suivant la revendication 1, dans lequel le métallocène d'au moins un type et le constituant activateur d'au moins un type sont soumis à une réaction dans un solvant ou diluant, et le produit direct ou le produit de décomposition du produit direct est mis en contact dans un solvant convenable avec une matière de support de catalyseur, puis le produit consistant en un catalyseur fixé sur un support est séparé sous forme d'une substance solide ou suspension à écoulement libre.

9. Procédé suivant la revendication 1, dans lequel le constituant activateur est dissous dans un solvant aromatique, le support est mis en suspension dans cette solution, on laisse la réaction s'effectuer, le solvant aromatique est éliminé et le constituant activateur fixé sur un support est ensuite mis en contact avec le constituant du type métallocène dans un solvant aliphatique.

10. Catalyseur comprenant le catalyseur ionique fixé sur un support pouvant être obtenu par le procédé suivant la revendication 1.

11. Procédé suivant la revendication 9, dans lequel le solvant aromatique est utilisé à une température de 25 à 200°C et est éliminé du constituant activateur fixé sur un support avant la mise en contact du constituant activateur fixé sur un support avec le métallocène.

12. Procédé de production d'un polymère, qui comprend la polymérisation d'alpha-oléfines, de dioléfines, d'oléfines cycliques tendues et/ou de monomères à insaturation acétylénique en présence d'un catalyseur fixé sur un support suivant la revendication 10 ou produit par le procédé suivant l'une quelconque des revendications 1 à 9 et 11.

13. Procédé suivant la revendication 12, dans lequel l'éthylène est homopolymérisé ou copolymérisé avec une oléfine ayant 3 à 10 atomes de carbone.

14. Procédé suivant la revendication 12 ou 13, dans lequel le polymère produit possède un poids moléculaire allant jusqu'à $2 \times 10^6$ et une distribution des poids moléculaires de 1,5 à 3.